(19) **Europäisches Patentamt / European Patent Office / Office européen des brevets**

(11) **EP 2 351 305 B1**

(12) # FASCICULE DE BREVET EUROPEEN

(45) Date de publication et mention de la délivrance du brevet:
**08.08.2012 Bulletin 2012/32**

(21) Numéro de dépôt: **09752190.0**

(22) Date de dépôt: **17.11.2009**

(51) Int Cl.:
**H04L 27/12** *(2006.01)*    **H04L 27/20** *(2006.01)*

(86) Numéro de dépôt international:
**PCT/EP2009/065275**

(87) Numéro de publication internationale:
**WO 2010/057871 (27.05.2010 Gazette 2010/21)**

(54) **PROCÉDÉ DE MODULATION MULTI-ÉTATS À PHASE CONTINUE ET ÉMETTEUR METTANT EN OEUVRE LE PROCÉDÉ**

MEHRFACHZUSTANDS-MODULATIONS-PROZESS MIT KONTINUIERLICHER PHASENMODULATION UND SENDER FÜR DIESEN PROZESS

MULTI STATE CONTINUOUS PHASE MODULATION PROCESS AND TRANSMITTER FOR THIS PROCESS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.11.2008 FR 0806554**

(43) Date de publication de la demande:
**03.08.2011 Bulletin 2011/31**

(73) Titulaire: **THALES**
**92200 Neuilly-sur-Seine (FR)**

(72) Inventeur: **LAURENT, Pierre-André**
**F-95550 Bessancourt (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 4 229 821**    **US-A1- 2005 286 653**
**US-A1- 2006 269 025**

**Description**

L'invention concerne un procédé pour la modulation d'une information numérique. Elle concerne par exemple les modulations à phase continue (CPM) et notamment les modulations de fréquence à enveloppe constante plus connues sous l'abréviation « GMSK » (Gaussian Minimum Shift Keying) et a pour objectif de permettre la suppression de l'interférence entre symboles observée lors de la réception d'un signal modulé selon l'invention. Elle s'applique, par exemple, dans le cadre de transmissions numériques au sein d'un système de téléphonie cellulaire. L'invention concerne également un émetteur de données numériques mettant en oeuvre le procédé selon l'invention.

Dans la suite du document, l'expression « Interférence entre symboles » est utilisée en référence au phénomène connu de l'Homme du métier décrivant le fait qu'un échantillon de signal reçu à un instant t ne dépend pas que d'un seul symbole émis mais également d'autres symboles voisins.

Le terme « état » d'un symbole est utilisé pour désigner la représentation dans le plan complexe dudit symbole. Le terme « constellation » d'une séquence de symboles complexe est utilisé pour désigner la représentation desdits symboles dans le plan complexe. L'expression « filtre adapté », connue de l'Homme du métier, est utilisée dans la suite du texte pour désigner le filtre linéaire optimal mis en oeuvre par un récepteur permettant de maximiser le rapport signal à bruit.

Un procédé de modulation à phase continue et à amplitude constante est connu par exemple par le document US 4 229 821 A.

Dans certains systèmes de transmission actuels, l'utilisation de modulations à amplitude constante, par exemple des modulations de phase ou de fréquence, est préférée car ces dernières permettent de maximiser la portée desdits systèmes la puissance d'émission étant constante et maximale dans ce cas. C'est par exemple le cas du système de téléphonie cellulaire GSM (Global System for Mobile communications).

La tendance actuelle des systèmes de communications consiste à augmenter le débit utile sans augmenter la largeur de bande du signal émis. Ceci peut se faire en augmentant le nombre de bits d'information véhiculés par un symbole transmis. Dans le cas d'une modulation binaire, un symbole transmis ne véhicule qu'un bit d'information, dans le cas d'une modulation à 4 ou 8 états, un symbole transmis porte l'information de 2 ou 3 bits respectivement.

De plus, pour pallier aux contraintes sur l'encombrement spectral du signal transmis, notamment sa largeur de bande fréquentielle occupée ainsi que la gêne potentiellement apportée aux canaux adjacents, il est connu d'utiliser des procédés de modulation à phase continue tels que la modulation GMSK.

Les procédés précités, bien qu'efficaces présentent comme inconvénient d'introduire une interférence entre symboles importante dans le signal reçu. Le symbole reçu à l'instant t est perturbé au moins par ses voisins émis aux instants t-1 et t+1, ce qui rend plus difficile la décision que doit effectuer un récepteur pour déterminer l'état initial dudit symbole. Par exemple, dans le cas d'une modulation binaire, un symbole peut prendre 8 états différents. Le récepteur devra donc effectuer une décision parmi ces 8 possibilités pour discriminer le bit correspondant. L'interférence entre symboles est d'autant plus gênante et le récepteur sera d'autant plus complexe que le nombre d'états possibles pour un symbole est élevé. De plus les procédés connus de l'Homme du métier pour démoduler un signal transmis selon une modulation à phase continue de type GMSK présentent l'inconvénient d'être complexes car ils mettent en oeuvre bien souvent un égaliseur ainsi qu'un estimateur du maximum de vraisemblance connus sous l'abréviation anglo-saxonne « MLSE » (Maximum Likelihood Sequence Estimator) implémenté, par exemple, via un algorithme de Viterbi.

A cet effet l'invention a pour objet un procédé de modulation à amplitude constante et phase continue de données numériques selon la revendication 1.

Dans une variante de réalisation, l'étape de combinaison est exécutée par un filtre à réponse impulsionnelle finie (RIF) de coefficients w(i), avec i variant de 0 à K.

Dans une autre variante de réalisation, l'étape de combinaison est mise en oeuvre par une mémoire morte dans laquelle les valeurs de la séquence transformée b(n) sont précalculées à partir des valeurs possibles de la séquence a(n).

Dans une autre variante de réalisation, la réponse impulsionnelle h(t) du filtre utilisé pour réaliser la modulation à phase continue est une fonction Gaussienne de durée T et d'écart-type σ.

Dans une autre variante de réalisation, la modulation à phase continue utilisée est une modulation GMSK (Gaussian Minimum Shift Keying)

L'invention a également pour objet un émetteur utilisé pour transmettre des données modulées via un procédé de modulation à phase continue et amplitude constante selon la revendication 6.

D'autres caractéristiques et avantages du procédé et du système selon l'invention apparaîtront mieux à la lecture de la description qui suit d'un exemple de réalisation donné à titre illustratif et nullement limitatif annexé des figures qui représentent :

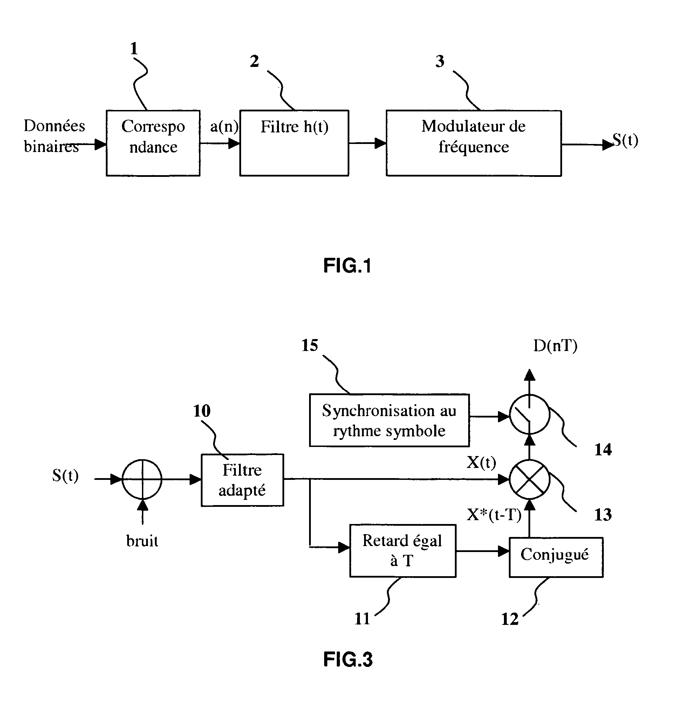

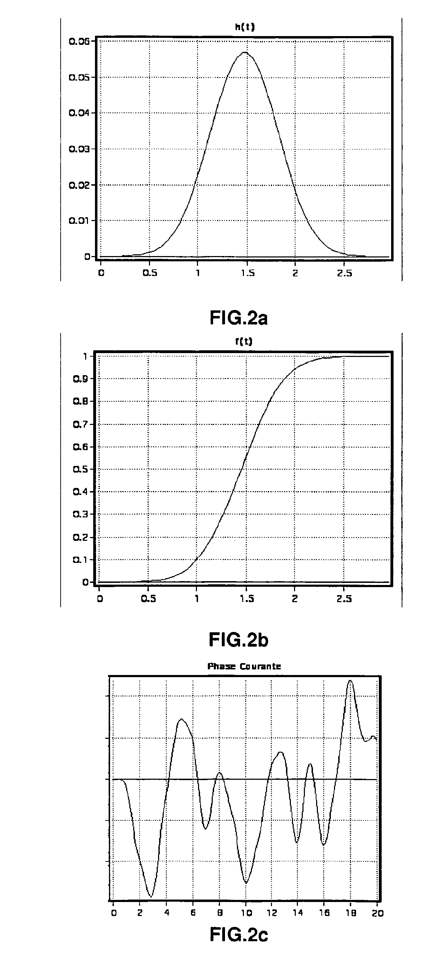

➢ La figure 1, un exemple de modulateur GMSK,
➢ Les figures 2a, 2b et 2c, un exemple de différentes caractéristiques d'une modulation GMSK, la réponse impulsionnelle d'un filtre h(t), la fonction f(t) intégrale de h(t) et la variation de la phase du signal modulé au cours du temps,
➢ La figure 3, un exemple de dispositif de démodulation différentielle d'un signal modulé par une modulation GMSK selon l'art antérieur,

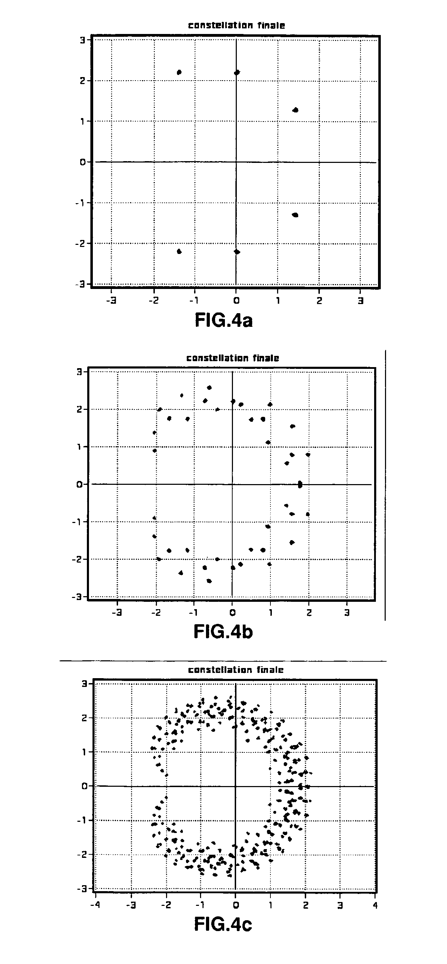

➢ Les figures 4a, 4b et 4c, plusieurs exemples de constellations obtenues par démodulation différentielle d'un signal modulé par une modulation GMSK,

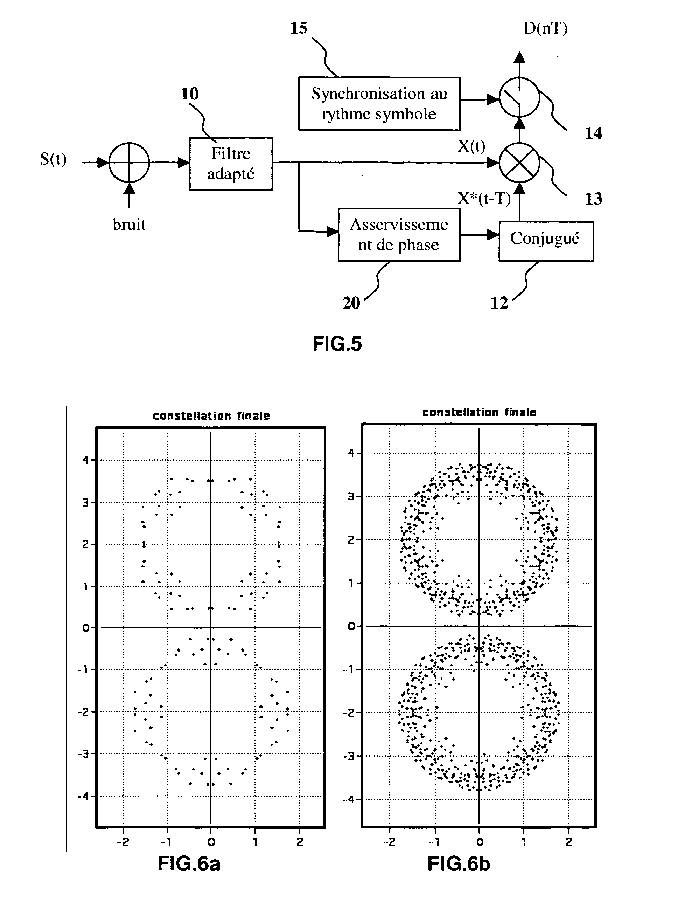

➢ La figure 5, un exemple de dispositif de démodulation cohérente d'un signal modulé par une modulation GMSK selon l'art antérieur,

➢ Les figures 6a et 6b, plusieurs exemples de constellations obtenues par démodulation cohérente d'un signal modulé par une modulation GMSK selon l'art antérieur,

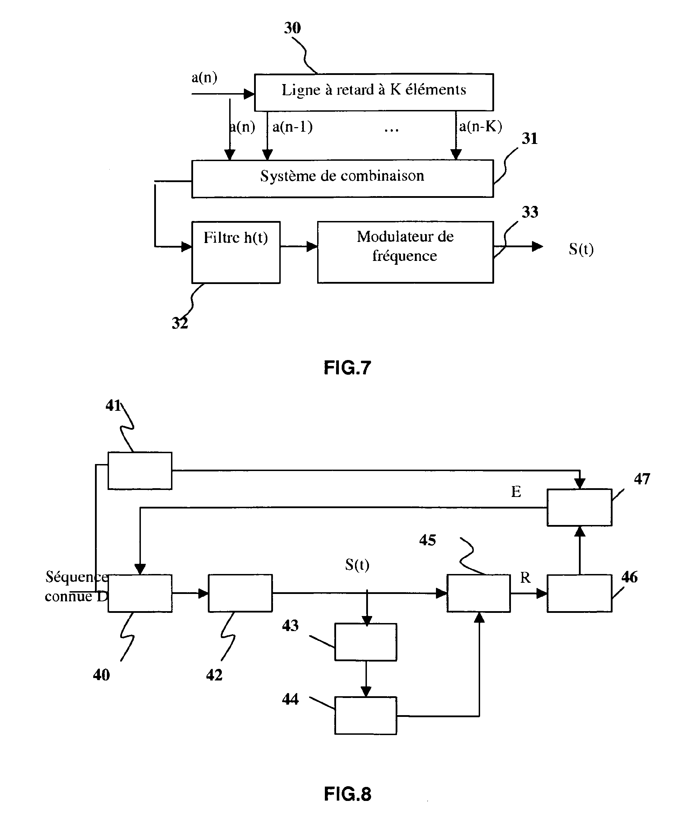

➢ La figure 7, un exemple de dispositif mettant en oeuvre un procédé de modulation selon l'invention,

➢ La figure 8, un exemple de réalisation d'un procédé permettant de déterminer les paramètres de la modulation définie par le procédé selon l'invention,

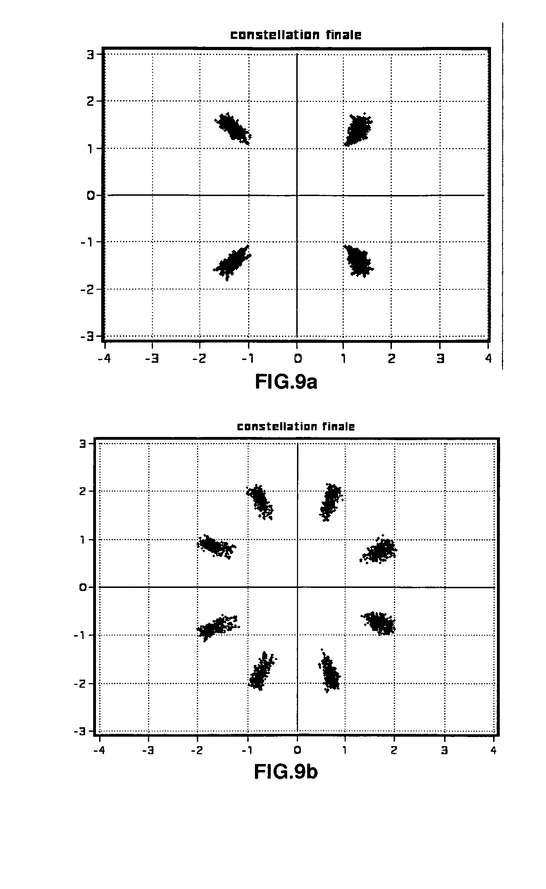

➢ Les figures 9a et 9b, un exemple de constellations obtenues par démodulation différentielle d'un signal modulé via le procédé selon l'invention,

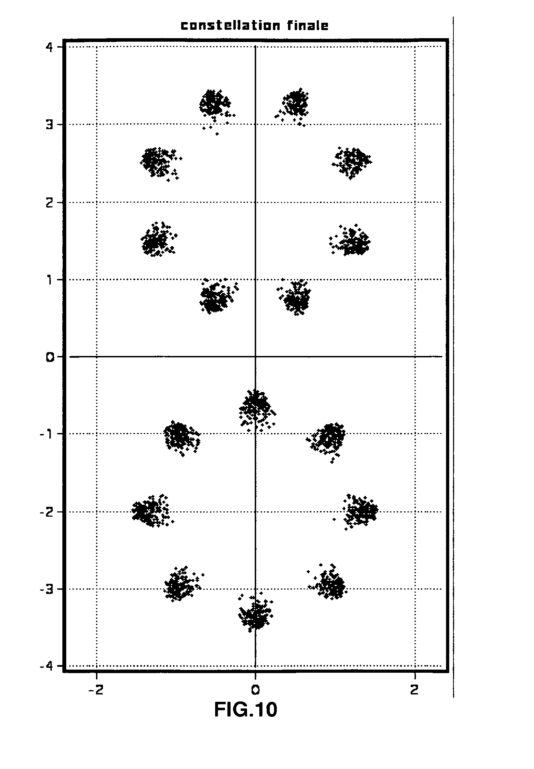

➢ La figure 10, un exemple de constellations obtenues par démodulation cohérente d'un signal modulé via le procédé selon l'invention,

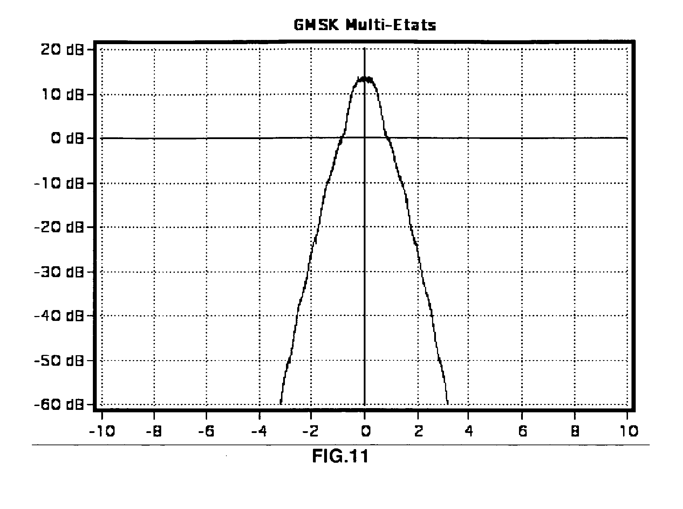

➢ La figure 11, un exemple de spectre en fréquence du signal émis via le procédé selon l'invention.

Afin de mieux faire comprendre le fonctionnement du procédé, la description comprend un rappel sur le principe de modulation et de démodulation des modulations à phase continue connues de l'Homme du métier sous le terme anglo-saxon CPM (Continuous Phase Modulation). Les modulations CPM sont une famille de modulations couramment utilisée pour transmettre des données numériques notamment dans le cadre de communications sans fil. Par opposition à d'autres procédés de modulation pour lesquels la phase du signal modulé est soumise à des transitions abruptes, les modulations CPM permettent de moduler la phase des symboles transmis de façon continue.

La figure 1 illustre un procédé de modulation à phase continue. Les données binaires à transmettre sont tout d'abord transformées en symboles a(n) via une opération de correspondance, 1, ou mapping en anglais. Cette étape permet d'associer un ou plusieurs bits à un symbole à transmettre. Les symboles obtenus peuvent être caractérisés par la représentation dans le plan complexe de leur constellation. Si le symbole a(n) véhicule un bit d'information, sa constellation comportera deux états, s'il véhicule deux bits d'information, sa constellation comportera quatre états, et de manière générale, si ledit symbole véhicule n bits d'information, sa constellation comportera $2^n$ états. Les symboles a(n) sont transmis via une série d'impulsions de Dirac espacées les unes des autres d'une durée égale à T, où T est la durée d'un symbole. L'impulsion de Dirac à l'instant n est représentée par le terme $a(n)\delta(t-nT)$. La suite d'impulsions de Dirac est ensuite filtrée par un filtre de réponse impulsionnelle définie par la fonction h(t), 2, puis transmis à un modulateur de fréquence 3. L'impulsion h(t) est définie sur une durée LT, où L est généralement un entier supérieur ou égal à 1. Les valeurs de cette impulsion sont nulles en dehors de l'intervalle [0, LT] et son intégrale entre 0 et LT vaut 1. Le modulateur de fréquence 3 fournit en sortie un signal S(t) qui peut être représenté par la formule suivante, où $F_0$ est la fréquence d'émission :

$$S(t) = \cos(2\pi F_0 t + \sum_{n=-\infty}^{+\infty} a(n) \int_{-\infty}^{t} h(x-nT)dx)$$

En notation complexe et de façon plus condensée, on peut également écrire :

$$S(t) = \sum_{n=-\infty}^{+\infty} e^{ja(n)f(t-nT)}$$

La fonction f(t) représente l'intégrale de h(t), valant 0 pour t négatif et 1 si t est supérieur à LT.

Les figures 2a et 2b représentent respectivement un exemple de fonctions h(t) et f(t) pour L=3, h(t) étant une impulsion Gaussienne d'écart type 0.35T.

La figure 2c représente la variation de la phase du signal S(t) au cours du temps qui est continue ce qui concourt à concentrer le spectre en fréquence du signal émis autour de la porteuse.

La figure 3 schématise un procédé de démodulation différentielle connu de l'Homme du métier. Ledit procédé permet de décider quelles sont les valeurs des symboles a(n) qui ont été le plus probablement émises lors de la réception du signal S(t). Ledit signal reçu S(t), auquel se rajoute du bruit lié à la transmission est filtré par un filtre adapté au signal 10. Le rôle de ce filtre est de maximiser le rapport signal sur bruit au moment de la prise de décision par le récepteur. Le résultat de cette opération X(t) est ensuite transmis à un module 11 qui lui applique un retard égal à la durée du symbole T puis le signal retardé est transmis à un module 12 qui calcule le conjugué du signal complexe et fournit en sortie le résultat X*(t-T). Les deux résultats X(t) et X*(t-T) sont ensuite multipliés ensemble via un module de multiplication complexe 13. Enfin un module de prise de décision 14 couplé à un module de synchronisation du signal au rythme symbole 15 permet de déterminer la valeur du symbole décidé D(nT) reçu à l'instant nT après échantillonnage du signal.

Les figures 4a, 4b et 4c représentent les constellations des signaux D(nT) obtenus après démodulation d'un signal modulé par une modulation GMSK via le procédé décrit à la figure 3 pour des symboles transmis a(n) comportant respectivement 2, 4 et 8 états. En l'absence totale d'interférence entre symboles, la constellation desdits symboles D(nT) ne devrait comporter que 2, 4 ou 8 points régulièrement répartis sur un cercle centré à l'origine. Hors pratiquement ce n'est pas le cas, même dans le cas le plus simple de symboles a(n) comportant 2 états, la constellation obtenue en réception présente 6 points distincts (dont 2 sont en fait double ce qui porte le nombre d'états à 8 en réalité). Pour les cas de figure correspondant à 4 ou 8 états, la décision permettant de déterminer quel est le symbole émis est difficile à prendre. Ces résultats montrent la complexité intrinsèque du schéma de modulation GMSK lorsqu'on souhaite démoduler le signal reçu via un procédé simple. Ceci est aussi valable pour d'autres modulations de la même famille où l'impulsion de fréquence h(t) n'est pas gaussienne, par exemple un cosinus surélevé.

La figure 5 schématise un procédé de démodulation cohérente connu de l'Homme du métier. Ce procédé nécessite de connaître la phase de référence de la porteuse, afin de s'assurer qu'un signal émis avec une phase donnée soit bien vu par le récepteur avec la même phase. Elle nécessite donc, à la place de la ligne à retard 11 de la figure 3, l'utilisation d'un système d'estimation de phase 20 qui utilise, par exemple, des symboles connus a priori insérés dans le signal modulé. Le reste du schéma est similaire au cas de la démodulation différentielle représentée à la figure 3. Un signal démodulé D(nT) est obtenu en sortie.

Les figures 6a et 6b représentent les constellations du signal démodulé selon le procédé schématisé à la figure 5. La figure 6a schématise le cas de symboles transmis comportant 4 états, la figure 6b correspond au cas à 8 états. Il existe en fait deux constellations distinctes, selon la parité du symbole courant, c'est pourquoi chaque figure représente deux constellations. La même conclusion peut être tirée que dans le cas de la démodulation différentielle, les constellations obtenues comportent un nombre important d'états bien supérieur à 4 (respectivement 8), la prise de décision sur les symboles reçus est complexe à mettre en oeuvre.

La figure 7 schématise un exemple de réalisation du procédé selon l'invention dans lequel le procédé de modulation GMSK décrit à la figure 1 est repris et modifié de la façon suivante :

⟫ Les symboles a(n) sont mémorisés dans une ligne à retard 30 comportant K cellules, K étant un entier positif non nul. A l'instant nT, T représentant la durée d'un symbole transmis, les valeurs disponibles dans la ligne à retard sont a(n-i), pour i variant de 0 à K.

⟫ Les K+1 valeurs disponibles sont fournies à l'entrée d'un système de combinaison 31 qui génère en sortie des échantillons b(n) obtenus par une combinaison adéquate des valeurs a(n-i), i variant de 0 à K. Lesdits échantillons b(n) sont produits au rythme symbole, et viennent remplacer les symboles a(n) dans le schéma d'origine. Ils sont ensuite filtrés par le filtre h(t), 32, et modulés par le modulateur de fréquence 33.

Dans une variante de réalisation, le système de combinaison 31 est un filtre à réponse impulsionnelle finie (RIF), symétrique. La valeur de b(n) est alors obtenue par combinaison linéaire des valeurs a(n) selon la formule suivante :

$$b(n) = \sum_{i=0}^{K} w(i)a(n-i) \text{ avec } w(K-p) = w(p)$$

où les valeurs w(i) sont les coefficients dudit filtre, p est un entier prenant des valeurs comprises entre 0 et K/2 et K correspond à la valeur du retard précédemment défini.

Dans une autre variante de réalisation, le système de combinaison 31 est une mémoire morte contenant un ensemble limité de valeurs b(n). A chaque séquence [a(n) ... a(n-K)] est associée une valeur précalculée de b(n) stockée dans ladite mémoire morte. Cette variante de réalisation a pour avantage de ne pas effectuer le calcul de filtrage en temps réel.

La figure 8 décrit un synoptique d'un système permettant de déterminer les coefficients du filtre w(i) mettant en oeuvre le procédé selon l'invention. Ledit filtre 40 est initialisé en fixant, par exemple, ses coefficients de la sorte :

w(0)=1 et w(i)=0 quel que soit i différent de 0

. Une séquence de symboles D(n), générée aléatoirement est fournie en entrée dudit filtre 40. Lesdits symboles sont eux-mêmes créés à partir d'une séquence binaire à laquelle on a appliqué une règle de correspondance telle que décrite à la figure 1 afin de générer des symboles véhiculant un, deux, trois ou plus généralement N bits. A cette séquence, on associe une constellation de référence 41 qui comporte un nombre d'états définis par le nombre de bits d'information véhiculés par symbole. A titre d'exemple, pour des symboles transportant deux bits d'information, la constellation de référence comportera quatre états pour les symboles transmis à l'instant k et quatre autres états déphasés de $\pi/4$ pour les symboles transmis à l'instant k+1.

La séquence de symboles D(n) est donc filtrée via le filtre 40 puis transmise à un modulateur 42 qui peut être, par exemple un modulateur GMSK défini par sa réponse impulsionnelle h(t) de longueur T et d'écart type $\sigma$, tel que décrit précédemment à la figure 2a. Le signal généré S(t) est ensuite fourni à un module 43 de calcul du spectre en fréquence dudit signal puis à un module 44 de calcul du filtre adapté qui donne en sortie la réponse impulsionnelle dudit filtre. Celui ci est ensuite mis en oeuvre par le dispositif 45 qui filtre le signal S(t) pour obtenir une séquence reçue démodulée R. Une étape 46 permet ensuite de calculer la constellation de la séquence reçue R qui va être comparée à la constellation de référence 41. Cette comparaison est effectuée via l'étape 47 par le biais, par exemple, d'un calcul d'erreur quadratique moyenne E entre les symboles de la constellation 41 et ceux de la constellation 47 :

$$E \quad = \quad \sum_{k=0}^{N} \quad ( \quad s_{k} \quad - \quad e_{k} \quad )^{2}$$

Où $S_k$ est le symbole reçu à l'instant k de la séquence R et $e_k$ le symbole de la constellation de référence 41 le plus proche en distance de $S_k$

La valeur obtenue d'erreur quadratique moyenne E est ensuite prise en compte afin de modifier les coefficients w(i) du système de combinaison 40 par la formule suivante :

w(i) =w(i) +/- δw, où δw est un paramètre permettant de régler la vitesse de

où δw est un paramètre permettant de régler la vitesse de convergence du système,

Cette opération est effectuée pour chaque coefficient w(i) de manière indépendante et est réitérée tant que la valeur de E n'a pas atteint une valeur minimum $E_{min}$ qui indique que la constellation 46 du signal reçu est bien conforme à la constellation de référence 41 recherchée où à défaut la plus proche possible. La fonction de calcul des coefficients w (i) a donc pour objet de minimiser le rapport signal à bruit entre les symboles générés par le procédé selon l'invention et les symboles de la constellation de référence 41.

Le procédé de modulation selon l'invention décrit aux figures 7 et 8 permet d'utiliser des récepteurs connus de l'art antérieur tels que ceux décrits aux figures 3 et 5 pour démoduler le signal reçu.

Les figures 9a et 9b montrent les constellations finales obtenues après démodulation différentielle d'un signal modulé via le procédé selon l'invention. Les cas correspondant à des modulations à 4 et 8 états respectivement sont considérés. L'étape de décision permettant de retrouver les symboles émis est clairement facilitée puisque le nombre d'états de la constellation est considérablement réduit par rapport aux figures 4b et 4c.

De même, les résultats concernant une démodulation cohérente d'un signal modulé via le procédé selon l'invention sont représentés sur la figure 10 pour le cas correspondant à 8 états possibles pour un symbole transmis initialement. Ici aussi, le processus de décision est facilité, le rapport signal sur bruit intrinsèque de la constellation est de l'ordre de 20dB ce qui est suffisant d'autant plus que les nuages de points sont orientés de telle sorte qu'ils minimisent l'erreur sur la phase, ce qui présente un avantage certain en démodulation différentielle.

Le spectre en fréquence du signal émis est également représenté à la figure 11, il présente l'avantage de ne pas avoir de lobes secondaires nets ce qui serait le cas avec un procédé de modulation à phase continue traditionnel. De plus, l'impulsion en fréquence gaussienne utilisée pour réaliser le modulateur GMSK, présente l'avantage d'avoir un spectre en fréquence qui décroit rapidement et de façon continue ce qui minimise l'influence sur les canaux adjacents.

Le procédé et le système selon l'invention présentent l'avantage de supprimer quasiment toute interférence entre symboles en réception du signal modulé. Cet aspect est important car il permet d'utiliser des récepteurs simplifiés par rapport aux systèmes mis en oeuvre pour démoduler un signal modulé par une modulation à phase continue de type GMSK. En effet une technique connue de l'Homme du métier et utilisée habituellement consiste à appliquer un algorithme d'estimation du maximum de vraisemblance pour déterminer quel symbole à été émis, ce type d'algorithme est complexe à mettre en oeuvre, le procédé selon l'invention permet de s'en soustraire.

## Revendications

1. Procédé de modulation à amplitude constante et phase continue de données numériques, lesdites données étant des symboles complexes véhiculant au moins un bit d'information et dont la constellation théorique comporte un nombre d'états N au moins égal à deux, comportant au moins les étapes suivantes :

   ➢ récupérer les symboles a(n) de données numériques à transmettre, lesdits symboles de données se présentant sous la forme d'une séquence de symboles,
   ➢ appliquer auxdits symboles a(n) un retard d'une durée K (30) afin d'obtenir une séquence de symboles retardés,
   ➢ appliquer à la séquence de symboles retardés une étape de combinaison (31) qui fournit à sa sortie une séquence transformée b(n) obtenue par combinaison desdits symboles retardés entre eux et pondérés par des coefficients w(i),
   ➢ moduler la séquence de symboles b(n) par un procédé de modulation à phase continue composé d'un filtre (32) de réponse impulsionnelle h(t) et d'un modulateur de fréquence (33) afin d'obtenir une séquence de symboles modulés,

   ledit procédé étant **caractérisé en ce que** lesdits coefficients w(i) sont obtenus par les étapes suivantes :

   ➢ Initialiser les coefficients w(i) tels que w(0)=1 et w(i)=0, quel que soit i différent de 0
   ➢ Générer une séquence de N symboles de données complexes $e_k$ et leur constellation (41) associée formant une constellation de référence,
   ➢ Filtrer ladite séquence de N symboles via l'étape de combinaison (40)
   ➢ Appliquer une modulation à phase continue (42) au résultat précédent permettant de générer un signal modulé S(t),
   ➢ Calculer le spectre en fréquence du signal modulé S(t) (43),
   ➢ A partir dudit spectre, calculer le filtre adapté au signal modulé S(t) (44),
   ➢ Réaliser le filtrage adapté du signal modulé S(t) (45) au moyen dudit filtre adapté pour obtenir une séquence R de symboles $S_k$ démodulés,
   ➢ Déterminer la constellation (46) dans le plan complexe de la séquence R de symboles $S_k$ obtenue après filtrage adapté,
   ➢ Calculer l'erreur quadratique moyenne (47) entre la constellation de référence (41) et la constellation (46) des symboles $S_k$ reçus,
   ➢ Pour chaque coefficient w(i), incrémenter ou décrémenter sa valeur d'une constante δw donnée et réitérer l'ensemble des étapes précédentes tant que l'erreur quadratique moyenne n'a pas atteint une valeur minimum $E_{min}$ donnée.

2. Procédé selon la revendication 1, **caractérisé en ce que** l'étape de combinaison est exécutée par un filtre à réponse impulsionnelle finie (RIF) de coefficients w(i), avec i variant de 0 à K.

3. Procédé selon la revendication 1, **caractérisé en ce que** l'étape de combinaison est mise en oeuvre par une mémoire morte dans laquelle les valeurs de la séquence transformée b(n) sont précalculées à partir des valeurs possibles de la séquence a(n).

4. Procédé selon l'une des revendications précédentes, **caractérisé en ce que** la réponse impulsionnelle h(t) du filtre (32) utilisé pour réaliser la modulation à phase continue est une fonction Gaussienne de durée T et d'écart-type σ.

5. Procédé selon l'une des revendications précédentes, **caractérisé en ce que** la modulation à phase continue utilisée est une modulation GMSK (Gaussian Minimum Shift Keying)

6. Emetteur adapté à transmettre des données modulées via un procédé de modulation à phase continue et amplitude constante, les données se présentant sous la forme d'une séquence de symboles complexes véhiculant au moins un bit d'information et dont la constellation théorique comporte un nombre d'états N au moins égal à deux, ledit émetteur comportant au moins les éléments suivants :

➢ une ligne à retard (30) comprenant K cellules produisant en sortie une séquence de symboles retardés,

➢ un système de combinaison (31) de coefficients w(i) adapté à exécuter une combinaison des symboles retardés entre eux et pondérés par des coefficients w(i) afin de produire une nouvelle séquence de symboles b(n),

➢ un système de modulation à phase continue comportant un filtre (32) et un modulateur de fréquence (33) et modulant la séquence de symboles b(n) afin d'obtenir une séquence de symboles modulés,

ledit émetteur étant **caractérisé en ce que** lesdits coefficients w(i) sont obtenus par les étapes de calcul suivantes :

➢ Initialiser les coefficients w(i) tels que w(0)=1 et w(i)=0, quel que soit i différent de 0,

➢ Générer une séquence de N symboles de données complexes $e_k$ et leur constellation (41) associée formant une constellation de référence,

➢ Filtrer ladite séquence de N symboles via le système de combinaison (40),

➢ Appliquer une modulation à phase continue (42) au résultat précédent permettant de générer un signal modulé S(t),

➢ Calculer le spectre en fréquence du signal modulé S(t) (43),

➢ A partir dudit spectre, calculer le filtre adapté au signal modulé S(t) (44),

➢ Réaliser le filtrage adapté du signal modulé S(t) (45) au moyen dudit filtre adapté pour obtenir une séquence R de symboles $S_k$ démodulés,

➢ Déterminer la constellation (46) dans le plan complexe de la séquence R de symboles $S_k$ obtenue après filtrage adapté,

➢ Calculer l'erreur quadratique moyenne (47) entre la constellation de référence (41) et la constellation (46) des symboles $S_k$ reçus,

➢ Pour chaque coefficient w(i), incrémenter ou décrémenter sa valeur d'une constante δw donnée et réitérer l'ensemble des étapes précédentes tant que l'erreur quadratique moyenne n'a pas atteint une valeur minimum $E_{min}$.

7. Emetteur selon la revendication 6 **caractérisé en ce que** ledit système de combinaison (31) est un filtre à réponse impulsionnelle finie (RIF) de coefficients w(i), pour i variant de 0 à K

8. Emetteur selon l'une des revendications 6 ou 7 **caractérisé en ce que** ledit système de combinaison (31) est une mémoire morte dans laquelle les valeurs de la séquence transformée b(n) sont précalculées à partir des valeurs possibles de la séquence a(n).

9. Emetteur selon l'une des revendications 6 à 8 **caractérisé en ce que** le filtre (32) utilisé pour réaliser la modulation à phase continue a une réponse impulsionnelle h(t) qui est une fonction Gaussienne de durée LT et d'écart-type σ.

10. Emetteur selon l'une des revendications 6 à 9 **caractérisé en ce que** le système de modulation utilisé est un système de modulation GMSK (Gaussian Minimum Shift Keying).

**Claims**

1. A method for constant amplitude and continuous phase modulation of digital data, said data being complex symbols carrying at least one information bit, and the theoretical constellation of which comprises a number of states N that is at least equal to two, comprising at least the following steps:

recovering the symbols a(n) of digital data to be transmitted, said data symbols being in the form of a sequence of symbols;

applying a delay of duration K (30) to said symbols a(n) so as to obtain a sequence of delayed symbols;

- applying to said sequence of delayed symbols a step of combining (31) that provides at its output a converted sequence b(n) that is obtained by combining said delayed symbols together, which are weighted by coefficients w(i);

- modulating the sequence of symbols b(n) by a process of continuous phase modulation comprising a pulse response h(t) filter (32) and a frequency modulator (33) so as to obtain a sequence of modulated symbols,

said process being **characterised in that** said coefficients w(i) are obtained by the following steps:

- initialising the coefficients w(i) so that w(0)=1 and w(i)=0, however much i differs from 0;
- generating a sequence of N complex data symbols $e_k$ and their associated constellation (41) forming a reference constellation;
- filtering said sequence of N symbols via the combining step (40);
- applying a continuous phase modulation (42) to the preceding result to allow a modulated signal S(t) to be generated;
- calculating the frequency spectrum of the modulated signal S(t) (43);
- calculating from said spectrum the filter that is matched to the modulated signal S(t) (44);
- completing the matched filtering of the modulated signal S(t) (45) by means of said matched filter so as to obtain a sequence R of demodulated symbols $S_k$;
- determining the constellation (46) in the complex plane of the sequence R of symbols $S_k$ obtained after matched filtering;
- calculating the mean square error (47) between the reference constellation (41) and the constellation (46) of the received symbols $S_k$;
- incrementing or decrementing the value of each coefficient w(i) by a given constant δw and repeating all of the preceding steps as long as the mean square error has not reached a given minimum value $E_{min}$.

2. The method according to claim 1, **characterised in that** the combining step is executed by a finite pulse response filter (RIF) of coefficients w(i), where i varies from 0 to K.

3. The method according to claim 1, **characterised in that** the combining step is implemented by a read-only memory in which the values of the converted sequence b(n) are pre-calculated on the basis of the possible values of the sequence a(n).

4. The method according to any one of the preceding claims, **characterised in that** the pulse response h(t) of the filter (32) that is used to realise the continuous phase modulation is a Gaussian function of duration T and standard deviation σ.

5. The method according to any one of the preceding claims, **characterised in that** the continuous phase modulation that is used is a GMSK (Gaussian Minimum Shift Keying) modulation.

6. An emitter designed to transmit modulated data via a method for continuous phase and constant amplitude modulation, the data being in the form of a sequence of complex symbols carrying at least one information bit, and the theoretical constellation of which comprises a number of states N that is at least equal to two, said emitter comprising at least the following elements:

- a delay line (30) comprising K cells producing a sequence of delayed symbols as output;
- a system for combining (31) coefficients w(i) that is designed to combine the delayed symbols together, which are weighted by coefficients w(i) so as to produce a new sequence of symbols b(n);
- a continuous phase modulation system comprising a filter (32) and a frequency modulator (33) and modulating the sequence of symbols b(n) so as to obtain a sequence of modulated symbols;

said emitter being **characterised in that** said coefficients w(i) are obtained by the following calculation steps:

- initialising the coefficients w(i) so that w(0)=1 and w(i)=0, however much i differs from 0;
- generating a sequence of N complex data symbols $e_k$ and their associated constellation (41) forming a reference constellation;
- filtering said sequence of N symbols via the combining system (40);
- applying a continuous phase modulation (42) to the preceding result to allow a modulated signal S(t) to be generated;
- calculating the frequency spectrum of the modulated signal S(t) (43);
- calculating from said spectrum the filter that is matched to the modulated signal S(t) (44);
- completing the matched filtering of the modulated signal S(t) (45) by means of said matched filter so as to obtain a sequence R of demodulated symbols $S_k$;
- determining the constellation (46) in the complex plane of the sequence R of symbols $S_k$ obtained after matched filtering;
- calculating the mean square error (47) between the reference constellation (41) and the constellation (46) of the received symbols $S_k$;

- incrementing or decrementing the value of each coefficient w(i) by a given constant δw and repeating all of the preceding steps as long as the mean square error has not reached a given minimum value $E_{min}$.

**7.** The emitter according to claim 6, **characterised in that** said combining system (31) is a finite pulse response filter (FIR) of coefficients w(i), where i varies from 0 to K.

**8.** The emitter according to any one of claims 6 to 7, **characterised in that** said combining step (31) is a read-only memory in which the values of the converted sequence b(n) are pre-calculated on the basis of the possible values of the sequence a(n).

**9.** The emitter according to any one of claims 6 to 8, **characterised in that** the filter (32) that is used to realise the continuous phase modulation has a pulse response h(t) that is a Gaussian function of duration LT and standard deviation σ.

**10.** The emitter according to any one of claims 6 to 9, **characterised in that** the continuous phase modulation used is a GMSK (Gaussian Minimum Shift Keying) modulation system.

## Patentansprüche

**1.** Digitaldatenmodulationsverfahren mit konstanter Amplitude und kontinuierlicher Phase, wobei die Daten komplexe Symbole sind, die wenigstens ein Informationsbit führen und deren theoretische Konstellation eine Zahl von N Zuständen von wenigstens zwei umfasst, das wenigstens die folgenden Schritte beinhaltet:

- Zurückgewinnen der Symbole a(n) von zu übertragenden digitalen Daten, wobei die Datensymbole in Form einer Folge von Symbolen vorliegen,
- Anwenden einer Verzögerung einer Dauer K (30) auf die Symbole a(n), um eine Folge von verzögerten Symbolen zu erhalten,
- Anwenden eines Kombinationsschritts (31) auf die Folge von verzögerten Symbolen, die am Ausgang eine transformierte Folge b(n) ergibt, die durch Kombinieren der zueinander verschobenen und durch Koeffizienten w(i) gewichteten Symbole miteinander erhalten wird,
- Modulieren der Folge von Symbolen b(n) mit einem kontinuierlichen Phasenmodulationsverfahren, das ein Impulsantwort-(h(t))-Filter (32) und einen Frequenzmodulator (33) umfasst, um eine Folge von modulierten Symbolen zu erhalten,

wobei das Verfahren **dadurch gekennzeichnet ist, dass** die Koeffizienten w(i) mit den folgenden Schritten erhalten werden:

- Initialisieren der Koeffizienten w(i), so dass w(0)=1 und w(i)=0, unabhängig davon, um wieviel i von 0 abweicht,
- Erzeugen einer Folge von N Symbolen von komplexen Daten $e_k$ und deren assoziierter Konstellation (41), die eine Referenzkonstellation bildet,
- Filtern der Folge von N Symbolen über den Kombinationsschritt (40),
- Anwenden einer kontinuierlichen Phasenmodulation (42) auf das vorherige Resultat, so dass ein moduliertes Signal S(t) erzeugt werden kann,
- Berechnen des Frequenzspektrums des modulierten Signals S(t) (43),
- Berechnen, von dem Spektrum, des an das modulierte Signal S(t) (44) adaptierten Filters,
- Realisieren der adaptierten Filterung des modulierten Signals S(t) (45) mittels des adaptierten Filters, um eine Folge R von demodulierten Symbolen $S_k$ zu erhalten,
- Ermitteln der Konstellation (46) in der Gaußschen Zahlenebene der nach der adaptierten Filterung erhaltenen Folge R von Symbolen $S_k$,
- Berechnen des mittleren quadratischen Fehlers (47) zwischen der Referenzkonstellation (41) und der Konstellation (46) der empfangenen Symbole $S_k$,
- Inkrementieren oder Dekrementieren, für jeden Koeffizienten w(i), seines Wertes um eine gegebene Konstante δw, und Wiederholen aller vorangegangenen Schritte, bis der mittlere quadratische Fehler einen gegebenen Minimalwert $E_{min}$ erreicht.

**2.** Verfahren nach Anspruch 1, **dadurch gekennzeichnet, dass** der Kombinationsschritt mit einem FIR-(endliche Impulsantwort)-Filter von Koeffizienten w(i) ausgeführt wird, wobei i zwischen 0 und K variiert.

3. Verfahren nach Anspruch 1, **dadurch gekennzeichnet, dass** der Kombinationsschritt mit einem Festwertspeicher ausgeführt wird, bei dem die Werte der transformierten Folge b(n) von den möglichen Werten der Folge a(n) vorberechnet werden.

4. Verfahren nach einem der vorherigen Ansprüche, **dadurch gekennzeichnet, dass** die Impulsantwort h(t) des zur Durchführung der kontinuierlichen Phasenmodulation verwendeten Filters (32) eine Gaußsche Funktion mit der Dauer T und der Standardabweichung $\sigma$ ist.

5. Verfahren nach einem der vorherigen Ansprüche, **dadurch gekennzeichnet, dass** die verwendete kontinuierliche Phasenmodulation eine GMSK-(Gaussian Minimum Shift Keying)-Modulation ist.

6. Sender zum Übertragen von Daten, die mit einem Verfahren zum Modulieren mit kontinuierlicher Phase und konstanter Amplitude moduliert wurden, wobei die Daten in Form einer Folge von komplexen Symbolen vorliegen, die wenigstens ein Informationsbit führen und deren theoretische Konstellation eine Anzahl von N Zuständen von wenigstens zwei umfasst, wobei der Sender wenigstens die folgenden Elemente umfasst:

   - eine Verzögerungsleitung (30) mit K Zellen, die als Ausgang eine Folge von verzögerten Symbolen erzeugen,
   - ein System (31) zum Kombinieren von Koeffizienten w(i) zum Ausführen einer Kombination von Symbolen, die zueinander verschoben und durch Koeffizienten w(i) gewichtet sind, um eine neue Folge von Symbolen b(n) zu erzeugen,
   - ein kontinuierliches Phasenmodulationssystem, das ein Filter (32) und einen Frequenzmodulator (33) umfasst und die Folge von Symbolen b(n) moduliert, um eine Folge von modulierten Symbolen zu erhalten,

   wobei der Sender **dadurch gekennzeichnet ist, dass** die Koeffizienten w(i) mit den folgenden Rechenschritten erhalten werden:

   - Initialisieren der Koeffizienten w(i), so dass w(0)=1 und w(i)=0, unabhängig davon, um wieviel i von 0 abweicht,
   - Erzeugen einer Folge von N Symbolen von komplexen Daten $e_k$ und deren assoziierter Konstellation (41), die eine Referenzkonstellation bildet,
   - Filtrieren der Folge von N Symbolen über das Kombinationssystem (40),
   - Anwenden einer kontinuierlichen Phasenmodulation (42) auf das vorherige Ergebnis, damit ein moduliertes Signal S(t) erzeugt werden kann,
   - Berechnen des Frequenzspektrums des modulierten Signals S(t) (43),
   - Berechnen, von dem Spektrum, des an das modulierte Signal S(t) (44) adaptierten Filters,
   - Durchführen der adaptierten Filterung des modulierten Signals S(t) (45) mit Hilfe des Filters, das zum Erhalten einer Folge R von demodulierten Symbolen $S_k$ adaptiert ist,
   - Ermitteln der Konstellation (46) in der Gaußschen Zahlenebene der Folge R von Symbolen $S_k$, die nach der adaptierten Filterung erhalten wird,
   - Berechnen des mittleren quadratischen Fehlers (47) zwischen der Referenzkonstellation (41) und der Konstellation (46) der empfangenen Symbole $S_k$,
   - Inkrementieren oder Dekrementieren, für jeden Koeffizienten w(i), seines Wertes um eine gegebene Konstante $\delta w$, und Wiederholen aller vorangegangenen Schritte, bis der mittlere quadratische Fehler einen minimalen Wert $E_{min}$ erreicht.

7. Sender nach Anspruch 6, **dadurch gekennzeichnet, dass** das Kombinationssystem (31) ein FIR-(endliche Impulsantwort)-Filter von Koeffizienten w(i) ist, wobei i zwischen 0 und K variiert.

8. Sender nach Anspruch 6 oder 7, **dadurch gekennzeichnet, dass** das Kombinationssystem (31) ein Festwertspeicher ist, in dem die Werte der transformierten Folge b(n) anhand der möglichen Werte der Folge a(n) vorberechnet werden.

9. Sender nach einem der Ansprüche 6 bis 8, **dadurch gekennzeichnet, dass** das zum Durchführen der kontinuierlichen Phasenmodulation verwendete Filter (32) eine Impulsantwort h(t) hat, die eine Gaußsche Funktion mit der Dauer LT und der Standardabweichung $\sigma$ ist.

10. Sender nach einem der Ansprüche 6 bis 9, **dadurch gekennzeichnet, dass** das verwendete Modulationssystem ein GMSK-(Gaussian Minimum Shift Keying)-Modulationssystem ist.

**1**

**2**

**3**

Données binaires → | Correspo ndance | a(n) → | Filtre h(t) | → | Modulateur de fréquence | → S(t)

## FIG.1

**15**

D(nT)

**10**

| Synchronisation au rythme symbole |

S(t) → ⊕ → | Filtre adapté |

bruit

X(t)

**14**

**13**

X*(t-T)

| Retard égal à T |

| Conjugué |

**11**

**12**

## FIG.3

**FIG.2a**

**FIG.2b**

**FIG.2c**

FIG.4a

FIG.4b

FIG.4c

**FIG.5**

**FIG.6a**

**FIG.6b**

**30**

a(n) → Ligne à retard à K éléments

a(n)    a(n-1)    …    a(n-K)

**31**

Système de combinaison

**33**

Filtre h(t) → Modulateur de fréquence → S(t)

**32**

**FIG.7**

**41**

**47**

E

**45**

S(t)

**46**

R

Séquence connue D

**43**

**40**

**42**

**44**

**FIG.8**

**FIG.9a**

**FIG.9b**

FIG.10

FIG.11

**EP 2 351 305 B1**

## RÉFÉRENCES CITÉES DANS LA DESCRIPTION

**Documents brevets cités dans la description**

- US 4229821 A